# EUROPEAN PATENT SPECIFICATION

(11) **EP 4 556 726 B1**
(45) Date of publication and mention of the grant of the patent: **23.09.2026**
(21) Application number: 23864239.1
(22) Date of filing: 31.01.2023
(51) Int. Cl.: F16C 11/04, G06F 1/16, H04M 1/02

(54) **FOLDING MECHANISM, ELECTRONIC DEVICE, AND DISASSEMBLY AND ASSEMBLY STRUCTURE**
KLAPPMECHANISMUS, ELEKTRONISCHE VORRICHTUNG SOWIE DEMONTAGE- UND MONTAGESTRUKTUR
MÉCANISME DE PLIAGE, DISPOSITIF ÉLECTRONIQUE ET STRUCTURE DE MONTAGE ET DE DÉMONTAGE

(30) Priority: 15.09.2022 CN 202222447995 U
(43) Date of publication of application: 21.05.2025
(73) Proprietor: Honor Device Co., Ltd., Shenzhen, Guangdong 518040 (CN)
(72) Inventor: ZHANG, Yaolei, Shenzhen, Guangdong 518040 (CN); YU, Dengpan, Shenzhen, Guangdong 518040 (CN); GAO, Mingqian, Shenzhen, Guangdong 518040 (CN)
(74) Representative: Thun, Clemens
(86) International application number: PCT/CN2023/073983
(87) International publication number: WO 2024/055496

(56) References cited:
- WO-A1-2019/237488
- WO-A1-2020/168972
- CN-A- 109 859 630
- CN-A- 114 006 963
- CN-A- 114 658 751
- CN-A- 115 022 426
- CN-U- 218 670 173
- US-A1- 2001 051 049
- US-A1- 2021 014 347
- US-B1- 7 278 341

## Description

This application claims priority to Chinese Patent Application CN 218 670 173 U (Application No. 202222447995.9), filed with the China National Intellectual Property Administration on September 15, 2022 and entitled "FOLDABLE MECHANISM, ELECTRONIC DEVICE, AND DISASSEMBLY-ASSEMBLY STRUCTURE".

### TECHNICAL FIELD

This application relates to the field of electronic device technologies, and in particular, to an electronic device comprising a foldable mechanism.

### BACKGROUND

In recent years, a technology of an electronic device has been updated more quickly. Because foldable electronic devices can achieve a larger display area and relatively good portability, the foldable electronic devices become increasingly more popular among users.

A foldable device includes a flexible screen, a foldable mechanism, and a support door plate. The foldable mechanism includes a base, a rotating shaft assembly, and a shaft cover. The rotating shaft assembly is installed on the base, the shaft cover is buckled on an outside side of the base, and the shaft cover provides a shielding and decoration function to some extent. The rotating shaft assembly is drivingly connected to the support door plate. The support door plate is located on a side of the base facing away from the shaft cover. A middle region of the flexible screen is supported by the support door plate. When the foldable device is in an unfolded state, the support door plate is located at a distance above the base to support the flexible screen. During folding of the foldable device, the support door plate gradually moves in a direction close to the base.

Currently, the base is connected to the shaft cover by using a screw, a through hole is provided on the base, and a threaded hole is provided on the shaft cover. The screw passes through the through hole and then is screwed into the threaded hole, so that the base is connected to the shaft cover, and a head of the screw is pressed over the base. The foregoing manner of connecting the base and the shaft cover causes a relatively large thickness of the foldable mechanism.

CN 114 006 963 A discloses a foldable device comprising a first shell, a second shell and a folding assembly. The folding assembly comprises a main shaft, two supporting plates located on the two sides of the main shaft and a plurality of moving parts.

WO 2019/237488 A1 discloses a display device comprising a flexible screen and a support piece used for supporting a bending area of the flexible screen. The bending area comprises a fixed area and a sliding area. The bending area is connected to the support piece by means of an elastic adhesive. When the flexible screen is bent, the sliding area slides, with respect to the support piece, in a direction away from the fixed area.

US 7 278 341 B1 discloses a structural bolt security apparatus including a security nut forming a threaded central hole for a bolt. The security nut has a groove in an upper surface and/or a side surface. At least one groove is at least partially separated from the threaded central hole by the upper surface.

### SUMMARY

This application provides an electronic device comprising a foldable mechanism, wherein a thickness of the foldable mechanism is relatively small.

The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

A first aspect of this application provides a foldable mechanism, including a base, a shaft cover, and locking members. Threaded members are disposed on the shaft cover, the threaded members each have an external thread, the locking members each have a head and a rod portion, the head is connected to the rod portion, the locking members each have a threaded hole that successively runs through the head and the rod portion, a through hole is provided on the base, an outer diameter of the head is greater than an aperture of the through hole, the rod portion is threaded to the threaded member by passing through the through hole, and the locking member is threaded to the threaded member through the threaded hole.

According to the foregoing technical solution, in the foldable mechanism, the locking member is threaded to the threaded member to fix the base and the shaft cover. Because the threaded hole runs through the head and the rod portion of the locking member, a length of screw-thread fit between the locking member and the threaded member is longer, and a total axial length obtained after the locking member is threaded to the threaded member is shorter, thereby helping reduce an overall thickness of the foldable mechanism.

In some implementations, a first disassembly-assembly portion is disposed on the head, and the first disassembly-assembly portion is configured to perform relative limiting with a disassembly-assembly structure, to drive the head to rotate by using the disassembly-assembly structure.

According to the foregoing technical solution, disposing of the first disassembly-assembly portion facilitates rotation of the head driven by the disassembly-assembly structure, that is, facilitates a disassembly-assembly operation of the locking member.

In some implementations, the first disassembly-assembly portion includes a groove, and the groove is provided on a side that is of the head and that is away from the rod portion.

According to the foregoing technical solution, disposing of the groove does not increase a height of the locking member, and therefore does not affect a total height of the foldable mechanism.

In some implementations, a bottom surface of the groove is a first inclined surface inclined relative to an axis of the head.

According to the foregoing technical solutions, a contact area between the groove and the disassembly-assembly structure can be increased by setting the inclined surface.

In some implementations, there are a plurality of first disassembly-assembly portions, and the plurality of first disassembly-assembly portions are distributed on the head at intervals in a circumferential direction.

In some implementations, the first disassembly-assembly portion is disposed on an outer edge of the head.

According to the foregoing technical solution, the first disassembly-assembly portion is disposed on the outer edge of the head, so that there can be a relatively large gap between the first disassembly-assembly portion and the threaded hole, to prevent, to some extent, the threaded member from being in contact with the disassembly-assembly structure after protruding out of the threaded hole.

In some implementations, there is a gap between the rod portion and the shaft cover.

According to the foregoing technical solution, in a manufacturing process, the threaded member has no thread at a specific distance at an end at which the threaded member is connected to the shaft cover. Therefore, this section of structure is not threaded to the locking member. By reducing a length of the rod portion, this section of structure is exposed, so that a material used for the locking member can be reduced, and a weight of the locking member can be reduced.

In some implementations, the gap is 0.1 mm-0.4 mm.

In some implementations, the outer diameter of the head is 2 mm-4 mm, an outer diameter of the rod portion is 1.5 mm-3.5 mm, and an outer diameter of the threaded member is 1.2 mm-2 mm.

In some implementations, an axial length of the threaded member is 0.8 mm-2 mm; an axial length of the head is 0.25 mm-0.8 mm; and a thickness of a region in the base and corresponding to the head is 0.25-0.8 mm.

In some implementations, a difference between the outer diameter of the head and the aperture of the through hole is 1 mm-4 mm.

In some implementations, the threaded member and the shaft cover are of an integral structure.

According to the foregoing technical solution, the threaded member and the shaft cover are of an integral structure in a manufacturing process, thereby reducing an assembly step and improving assembly efficiency.

In some implementations, a welding region or an adhesive bonding region is disposed at one end of the threaded member, and the threaded member is connected to the shaft cover through the welding region or the adhesive bonding region.

According to the foregoing technical solution, the threaded member and the shaft cover can be separately manufactured, thereby facilitating production and processing.

In some implementations, at least three threaded members are disposed at intervals in a length direction of the base, and each of the threaded members is threaded to one locking member.

A second aspect of this application provides an electronic device, including the foldable mechanism provided in any one of the foregoing technical solutions.

According to the foregoing technical solutions, because the electronic device includes the foregoing foldable mechanism, the electronic device has at least all beneficial effects of the foldable mechanism. Details are not described herein again.

In some implementations, the electronic device further includes a middle support plate, the middle support plate is disposed on a side of the base facing away from the shaft cover, an accommodating cavity is provided on a side of the middle support plate facing the base, and a part of a structure of the threaded member and/or the locking member is located in the accommodating cavity in a folded state of the foldable mechanism.

According to the foregoing technical solution, a minimum distance between the middle support plate and the shaft cover can be further reduced by setting the accommodating cavity.

In some implementations, the accommodating cavity runs through the middle support plate in a thickness direction of the middle support plate.

A third aspect of this application provides a disassembly-assembly structure, the disassembly-assembly structure includes a rod body, one end of the rod body is a disassembly-assembly end, the disassembly-assembly end matches a head of a locking member in the foldable mechanism provided in any one of the foregoing technical solutions, and the disassembly-assembly end is configured to rotate the head.

According to the foregoing technical solution, using the disassembly-assembly structure facilitates rotating the locking member, thereby facilitating using the locking member to lock and fix the base and the shaft cover, to facilitate assembling the foldable mechanism with a relatively thin thickness.

In some implementations, the disassembly-assembly end includes a second disassembly-assembly portion, and the second disassembly-assembly portion is configured to perform relative limiting with a first disassembly-assembly portion of the head, to rotate the head by using the second disassembly-assembly portion.

In some implementations, the first disassembly-assembly portion includes a groove, the second disassembly-assembly portion includes a bump, the bump is capable of extending into the groove, and the bump is in contact with an inner wall of the groove.

In some implementations, a bottom surface of the groove is a first inclined surface, the bump has a second inclined surface that has a same inclination angle as the first inclined surface, and the first inclined surface is capable of being in contact with the second inclined surface.

In some implementations, a handle is disposed on the other end of the rod body.

### BRIEF DESCRIPTION OF DRAWINGS

FIG. 1 is a schematic diagram 1 of a relative position relationship between a foldable mechanism and a middle support plate according to an embodiment of this application;
FIG. 2 is an exploded schematic diagram 1 of parts of a foldable mechanism and a middle support plate according to an embodiment of this application;
FIG. 3 is a schematic diagram 2 of a relative position relationship between a foldable mechanism and a middle support plate according to an embodiment of this application;
FIG. 4 is a cross-sectional view at A-A in FIG. 3;
FIG. 5 is a schematic diagram 3 of a relative position relationship between a foldable mechanism and a middle support plate according to an embodiment of this application;
FIG. 6 is a cross-sectional view at B-B in FIG. 5;
FIG. 7 is an exploded schematic diagram 2 of parts of a foldable mechanism and a middle support plate according to an embodiment of this application;
FIG. 8 is a schematic diagram 1 of a structure of a locking member according to an embodiment of this application;
FIG. 9 is a cross-sectional view at C-C in FIG. 8;
FIG. 10 is a cross-sectional view at D-D in FIG. 8;
FIG. 11 is a schematic diagram 1 of a structure of a shaft cover according to an embodiment of this application;
FIG. 12 is a schematic diagram of a structure of another shaft cover according to an embodiment of this application;
FIG. 13 is a schematic diagram of distribution of threaded members on a shaft cover according to an embodiment of this application;
FIG. 14 is a schematic diagram of distribution of threaded members on another shaft cover according to an embodiment of this application;
FIG. 15 is a schematic diagram of distribution of threaded members on still another shaft cover according to an embodiment of this application;
FIG. 16 is a schematic diagram of a structure of a disassembly-assembly structure according to an embodiment of this application;
FIG. 17 is a partially enlarged view at E in FIG. 16;
FIG. 18 is a schematic diagram of matching between a disassembly-assembly structure and a locking member according to an embodiment of this application; and
FIG. 19 is a partially enlarged view at F in FIG. 18.

Meanings represented by reference numerals in the accompanying drawings are respectively as follows:
100. base; 110. through hole; 120. first substrate; 130. second substrate;
200. shaft cover; 210. threaded member; 211. connection region;
300. locking member; 310. head; 311. first disassembly-assembly portion; 312. first inclined surface; 320. rod portion; 330. threaded hole;
400. disassembly-assembly structure; 410. rod body; 420. disassembly-assembly end; 421. second disassembly-assembly portion; 422. second inclined surface; 430. handle;
500. middle support plate; 510. accommodating cavity.

### DESCRIPTION OF EMBODIMENTS

To make the objectives, technical solutions, and advantages of this application clearer, the following further describes implementations of this application in detail with reference to the accompanying drawings.

It should be understood that "a plurality of" mentioned in this application means two or more. In the descriptions of this application, unless otherwise stated, "/" means "or". For example, A/B may indicate A or B. The term "and/or" in this specification is merely an association relationship for describing associated objects, and indicates that three relationships may exist. For example, A and/or B may indicate the following three cases: Only A exists, both A and B exist, and only B exists. In addition, to clearly describe the technical solutions of this application, words such as "first" and "second" are used to distinguish between same items or similar items with basically the same functions and effects. A person skilled in the art may understand that the words such as "first" and "second" do not limit a quantity or an execution sequence, and the words such as "first" and "second" do not define a definite difference.

In a conventional foldable mechanism, a base is connected to a shaft cover by using a screw, a through hole is provided on the base, and a threaded hole is provided on the shaft cover. The threaded hole is a blind hole, and the screw passes through the through hole of the base and then is screwed into the threaded hole. After the screw is locked, a head of the screw and the shaft cover clamp the base from both sides, so that the shaft cover is relatively fixedly connected to the base. Because the shaft cover needs to maintain some structural strength, after the threaded hole is made, the shaft cover still needs to retain a thickness. A thickness of the shaft cover at which the threaded hole is provided is called L1. To prevent production errors in a manufacturing process of the threaded hole and the screw from damaging the shaft cover due to the screw being inserted too deeply into the threaded hole, in a design process, a depth of the threaded hole is relatively long, that is, there is a distance between an end portion of the screw and a bottom surface of the threaded hole after the screw is locked. The distance is called L2. To ensure connection strength between the base and the shaft cover, an effective locking distance between the screw and the threaded hole, that is, an axial length of a region (referred to as a screw-thread fit region) in which the screw is in screw-thread fit with the threaded hole actually needs to reach a specified length, and this length is called L3. An axial length of the through hole on the base is L4, and a thickness of the head of the screw is L5. Due to this disposition, at a connection between the base and the shaft cover, a thickness H1 of the foldable mechanism is at least L5+L4+L3+L2+L1, and the thickness H1 of the conventional foldable mechanism is relatively large.

The following explains and describes in detail a foldable mechanism, an electronic device, and a disassembly-assembly structure provided in embodiments of this application. In the accompanying drawings in embodiments of this application, all leads with arrows point to a surface of a device, and all leads with dots point to a device itself.

### First embodiment

An embodiment of this application provides a foldable mechanism. The foldable mechanism may be applied to an electronic device. An electronic device with a foldable function is formed by the foldable mechanism in cooperation with a rotating shaft assembly, a screen support plate, and a flexible screen in the electronic device. The electronic device with the foldable function has a relatively large foldable area and a relatively good portable capability, which helps improve user experience.

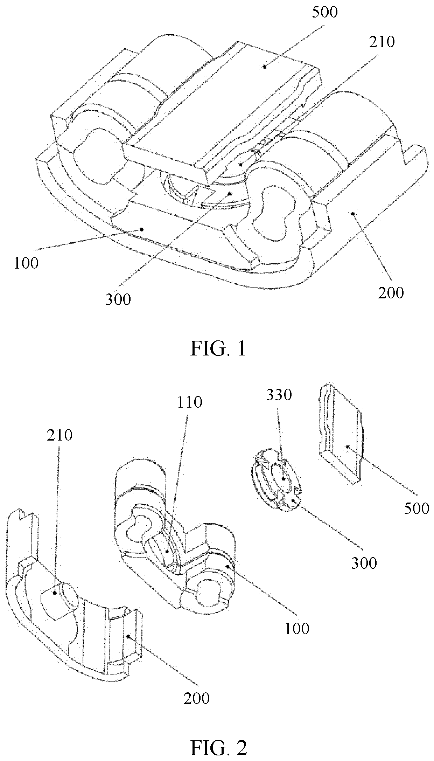

As shown in FIG. 1 to FIG. 7, the foldable mechanism includes a base 100, a shaft cover 200, and locking members 300. Threaded members 210 are disposed on the shaft cover 200, the threaded members 210 each have an external thread, the locking members 300 each have a head 310 and a rod portion 320, the head 310 is connected to the rod portion 320, the locking member 300 has a threaded hole 330 that sequentially runs through the head 310 and the rod portion 320, a through hole 110 is provided on the base 100, an outer diameter of the head 310 is greater than an aperture of the through hole 110, the rod portion 320 is threaded to the threaded member 210 by passing through the through hole 110, the locking member 300 is threaded to the threaded member 210 through the threaded hole 330, and a part of a structure of the base 100 is located between the head 310 of the locking member 300 and the shaft cover 200.

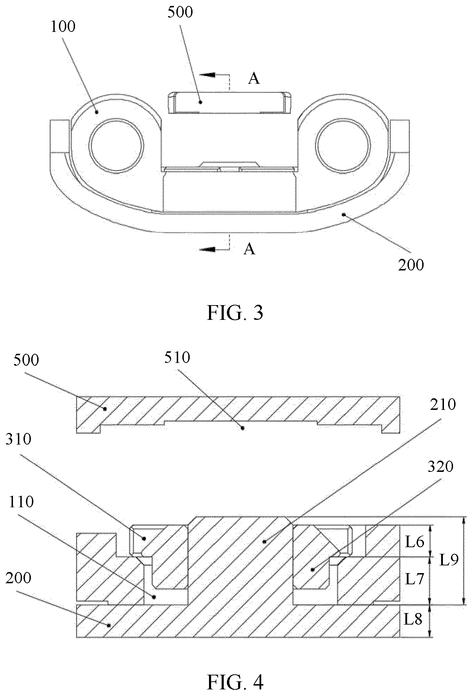

According to the foregoing technical solution, at a connection between the base 100 and the shaft cover 200 in the foldable mechanism, a thickness H2 of the foldable mechanism is mainly related to the following parts: as shown in FIG. 4, a thickness L6 of the head 310 of the locking member 300, an axial length L7 of the through hole 110 of the base 100, a thickness L8 of the shaft cover 200, and an axial length L9 of the threaded member 210. Because the head 310 of the locking member 300 needs to be used for locking the base 100, an axial length L10 of the rod portion 320 of the locking member 300 is less than or equal to L7. An axial length of the threaded hole 330 of the locking member 300 is L6+L10, and an axial length L11 of an actual screw-thread fit region between the locking member 300 and the threaded member 210 is less than or equal to L6+L10. Because after the shaft cover 200 is connected to the base 100 by using the locking member 300, the locking member 300 is sleeved on the threaded member 210, and the head 310 of the locking member 300 and the shaft cover 200 respectively clamp the base 100 from both sides. If the locking member 300 is in a locked state, and a threaded column does not protrude to the outside of the threaded hole 330 of the locking member 300, H2=L6+L7+L8. If the threaded column protrudes outside the threaded hole 330 of the locking member 300, H2=L9+L8.

In comparison with a foldable mechanism in the conventional technology, if thicknesses of the shaft covers 200 are equal, that is, L8=L1, axial lengths of screw-thread fit regions are equal, that is, L11=L3, thicknesses of structures (a head 310 of a screw in the conventional technology and the head 310 of the locking portion in this embodiment) used to limit or fix the bases 100 are equal, that is, L6=L5, and axial lengths of the through holes 110 of the bases 100 are equal, that is, L7=L4, when the threaded column does not protrude to the outside of the threaded hole 330 of the locking member 300, a thickness H2=L6+L7+L8 of the foldable mechanism provided in this embodiment is compared with a thickness H1=L5+L4+L3+L2+L1 of the foldable mechanism in the conventional technology, and H1-H2=L2+L3. That is, in this embodiment of this application, the axial length of the screw-thread fit region overlaps the axial length of the through hole 110 on the base 100 in a specific range, so that the thickness of the head 310 of the locking member 300 overlaps the axial length of the screw-thread fit region in a specific range, thereby reducing a total thickness of the foldable mechanism at the connection between the shaft cover 200 and the base 100.

When the threaded column protrudes to the outside of the threaded hole 330, H2=L9+L8, and L9 is slightly greater than L6+L7. A reason for setting the threaded column to protrude to the outside of the threaded hole 330 is to ensure that a length of the threaded hole 330 is closer to or even equal to a length of an axis of the screw-thread fit region, that is, threads in the threaded hole 330 all effectively threadedly match with threads of the threaded column. Therefore, an end portion of the threaded column has a partial length without complete threads due to processing and manufacturing requirements. The partial length is less than or equal to a length occupied by half a circle of threads on the axis, and the length is necessarily less than the length of the axis of the screw-thread fit region, that is, a difference between L9 and L6+L7 is less than L3. That is, when the threaded column protrudes to the outside of the threaded hole 330, L2<H1-H2<L2+L3. The total thickness of the foldable mechanism in this embodiment of this application at the connection between the shaft cover 200 and the base 100 is still less than a total thickness of the foldable mechanism in the conventional technology at the connection between the shaft cover 200 and the base 100.

The base 100 may be of an integral structure, and the through hole 110 is a hole running through the base 100. Alternatively, the base 100 may include a plurality of substrates. The plurality of substrates are disposed in sequence in a length direction of the base 100. The through hole 110 may be provided at a joint between two substrates, that is, an arc-shaped groove is provided on each of opposite side surfaces of two adjacent substrates, and one through hole 110 is formed after the arc-shaped grooves of the two substrates are aligned. In this disposing manner, two substrates may be locked by using one locking member 300.

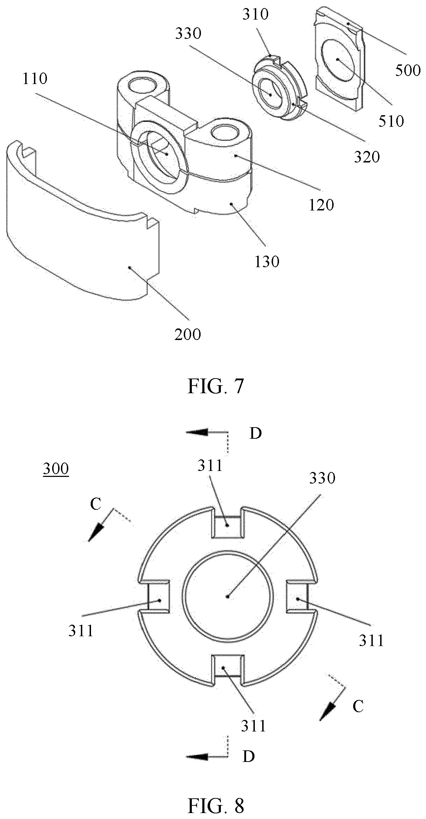

For example, as shown in FIG. 7, the base 100 includes two substrates, which are respectively referred to as a first substrate 120 and a second substrate 130. A first arc-shaped groove is provided on a side of the first substrate 120 facing the second substrate 130, and a second arc-shaped groove is provided on a side of the second substrate 130 facing the first substrate 120. When the first substrate 120 and the second substrate 130 are successively placed on the shaft cover 200 in a length direction (a length direction of the shaft cover 200 is the same as a length direction of the base 100), an opening of the first arc-shaped groove faces an opening of the second arc-shaped groove, and the through hole 110 on the base 100 is enclosed after the first arc-shaped groove is butt-jointed with the second arc-shaped groove. One threaded member 210 passes through the through hole 110, and one locking member 300 is correspondingly threaded to the threaded member 210. A partial region of the head 310 of the locking member 300 is in contact with the first substrate 120, and a partial region thereof is in contact with the second substrate 130. Therefore, the locking member 300 has a locking effect on both the first substrate 120 and the second substrate 130, and the first substrate 120 and the second substrate 130 can be fixed to the shaft cover 200 by using the locking member 300.

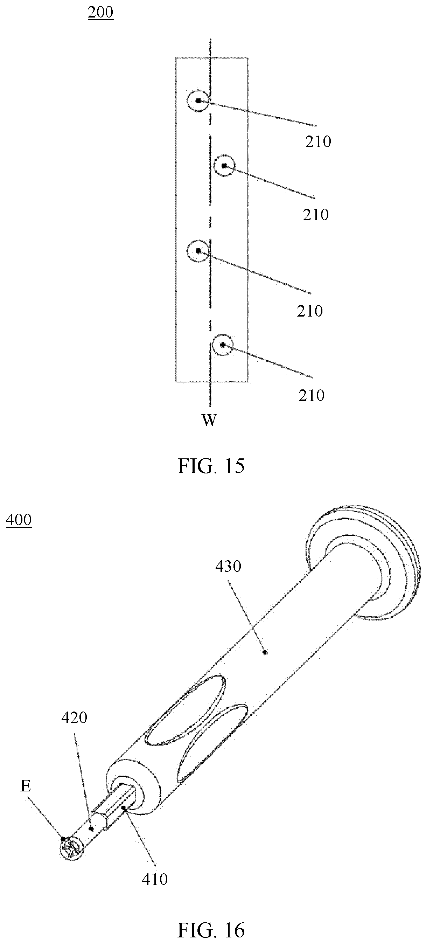

For ease of assembling the locking member 300, the locking member 300 may be rotated by using a disassembly-assembly structure 400 (for the disassembly-assembly structure 400, refer to FIG. 16 to FIG. 19). For example, a groove body may be provided on the disassembly-assembly structure 400, the groove body is buckled on the head 310 of the locking member 300, and rotation of the locking member 300 is driven by rotation of the disassembly-assembly structure 400, so that an operation is convenient. **In** comparison with directly screwing the locking member 300 by a hand of an operator, a thickness of a sidewall of a groove body of a disassembly-assembly end 420 may be set to be thinner, and occupied space required for rotation is relatively smaller. That is, relatively small space is reserved in an outer region of the head 310 of the locking member 300 to achieve assembly, so that a structure of the foldable mechanism can be set to be more compact, thereby reducing space, and facilitating lightweight design of the foldable mechanism.

As shown in FIG. 7 to FIG. 10, a first disassembly-assembly portion 311 is disposed on the head 310, and the first disassembly-assembly portion 311 is configured to perform relative limiting with the disassembly-assembly structure 400, to drive the head 310 to rotate by using the disassembly-assembly structure 400. Disposing of the first disassembly-assembly portion 311 facilitates rotation of the head 310 driven by the disassembly-assembly structure 400, that is, facilitates a disassembly-assembly operation of the locking member 300.

**In** an optional implementation, the first disassembly-assembly portion 311 is disposed on an end surface of an end that is of the head 310 and that is away from the rod portion 320, so that space occupied in a circumferential outer region of the locking member 300 is smaller.

The first disassembly-assembly portion 311 may be a groove or a protrusion. **In** a specific implementation, the first disassembly-assembly portion 311 includes a groove, and the groove is provided on the end surface of the end that is of the head 310 and that is away from the rod portion 320. Disposing of the groove does not increase a height of the locking member 300, and therefore does not affect a total height of the foldable mechanism.

One or more first disassembly-assembly portions 311 may be disposed on the end surface that is of the head 310 and that is away from the rod portion 320. When a plurality of first disassembly-assembly portions 311 are disposed, the plurality of first disassembly-assembly portions 311 are disposed on the head 310 at intervals in a circumferential direction of the head 310, or the plurality of first disassembly-assembly portions 311 are disposed at intervals in a peripheral region of the threaded hole 330. The plurality of first disassembly-assembly portions 311 may be evenly disposed in the peripheral region of the threaded hole 330, or may be unevenly disposed. The first disassembly-assembly portion 311 is configured to match with a second disassembly-assembly portion 421 in the disassembly-assembly structure 400. Therefore, in a specific range, a quantity of first disassembly-assembly portions 311 increases, so that a total matching region between the locking member 300 and the disassembly-assembly structure 400 increases, and relative stability between the disassembly-assembly structure 400 and the locking member 300 is higher during rotation. A specific setting quantity of the first disassembly-assembly portion 311 is related to factors such as a size of an aperture of the threaded hole 330 of the locking member 300 and a size of the outer diameter of the head 310 of the locking member 300. If the outer diameter of the head 310 of the locking member 300 is relatively large, a relatively large quantity of first disassembly-assembly portion 311 may be set, so that in a process in which the locking member 300 is driven by using the disassembly-assembly structure 400 to rotate, forces exerted on regions of the locking member 300 are relatively uniform.

In some implementations, the first disassembly-assembly portion 311 is disposed on an outer edge of the head 310, and the threaded hole 330 is disposed coaxially with the head 310. The first disassembly-assembly portion 311 is disposed on the outer edge of the head 310, so that a relative distance between the first disassembly-assembly portion 311 and the threaded hole 330 is larger, thereby helping enhance structural strength of the head 310 of the locking member 300, and avoid interference between the second disassembly-assembly portion 421 and the threaded member 210.

In FIG. 8, an end surface of the head 310 of the locking member 300 is circular, the threaded hole 330 is disposed coaxially with the locking portion, the first disassembly-assembly portion 311 is a groove, there are four first disassembly-assembly portions 311, the four first disassembly-assembly portions 311 are evenly disposed at intervals in an end-face edge region of the head 310 of the locking member 300, and an included angle between two adjacent first disassembly-assembly portions 311 is equal to or approximated to 90°. Four second disassembly-assembly portions 421 are disposed in the disassembly-assembly structure 400 corresponding to the locking member 300, and the second disassembly-assembly portion 421 is a bump. The four second disassembly-assembly portions 421 respectively extend into the four first disassembly-assembly portions 311. By rotating the disassembly-assembly structure 400, the locking member 300 is driven to rotate. Because the locking member 300 is driven to rotate synchronously in four directions outside the axis of the locking member 300, rotation stability is better, and relative shaking between the locking member 300 and the disassembly-assembly structure 400 can be reduced.

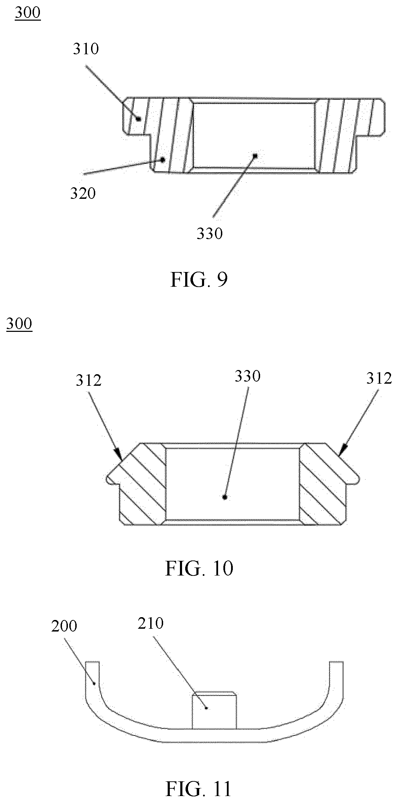

As shown in FIG. 8 and FIG. 10, in some implementations, the first disassembly-assembly portion 311 includes a groove, and a bottom surface of the groove is a first inclined surface 312 inclined relative to an axis of the head 310. By setting the first inclined surface 312, a contact area between the groove and the disassembly-assembly structure 400 can be increased, so that friction between the protrusion and the groove is increased. Therefore, it is convenient for the disassembly-assembly structure 400 to drive the locking member 300 to rotate, and relative stability between the disassembly-assembly structure 400 and the locking member 300 is higher during rotation.

According to the foregoing technical solution, the first disassembly-assembly portion 311 is disposed on an outer edge of the head 310, so that there can be a relatively large gap between the first disassembly-assembly portion 311 and the threaded hole 330, to prevent, to some extent, the threaded member 210 from being in contact with the disassembly-assembly structure 400 after protruding out of the threaded hole 330.

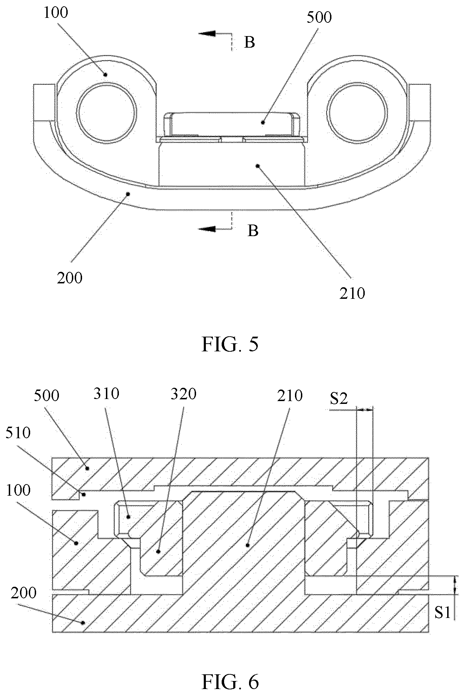

In some implementations, as shown in FIG. 4 and FIG. 6, there is a gap between the rod portion 320 and the shaft cover 200.

According to the foregoing technical solution, in a manufacturing process, the threaded member 210 has no thread at a specific distance at an end at which the threaded member 210 is connected to the shaft cover 200. Therefore, this section of structure is not threaded to the locking member 300. By reducing a length of the rod portion 320, this section of structure is exposed, so that a material used for the locking member 300 can be reduced, and a weight of the locking member 300 can be reduced. Optionally, as shown in FIG. 6, a gap S1 between the rod portion 320 and the shaft cover 200 is 0.1 mm-0.4 mm. For example, the gap S1 between the rod portion 320 and the shaft cover 200 may be 0.1 mm, 0.12 mm, 0.15 mm, 0.2 mm, 0.27 mm, 0.35 mm, or 0.4 mm.

In some implementations, the outer diameter of the head 310 is 2 mm-4 mm, an outer diameter of the rod portion 320 is 1.5 mm-3.5 mm, and an outer diameter of the threaded member 210 is 1.2 mm-2 mm. In addition, the outer diameter of the head 310 is greater than the outer diameter of the rod portion 320, the outer diameter of the threaded member 210 matches an inner diameter of the threaded hole 330, and the inner diameter of the threaded hole 330 is less than the outer diameter of the rod portion 320. Therefore, the outer diameter of the threaded member 210 is less than the outer diameter of the rod portion 320.

In some implementations, the axial length of the threaded member 210 is 0.8 mm-2 mm, and an axial length of the head 310 is 0.25 mm-0.8 mm. A thickness of a region that is on the base 100 and that corresponds to the head 310 is 0.25 mm-0.8 mm. Alternatively, a thickness of a structure in a region that is of the base 100 and that is located between the head 310 and the shaft cover 200 is 0.25 mm-0.8 mm after the locking member 300 and the threaded member 210 are threadedly connected.

In some implementations, a difference between the outer diameter of the head 310 and the aperture of the through hole 110 is 1 mm-4 mm. In other words, as shown in FIG. 6, a radial distance S2 of an overlapping region between the head 310 and the base 100 is approximately 0.5 mm-2 mm. Within this distance range, the head 310 is in contact with the base 100 to limit the base 100 by using the head 310.

As shown in FIG. 11, the threaded member 210 and the shaft cover 200 are of an integral structure. According to the foregoing technical solution, in a manufacturing process, the threaded member 210 and the shaft cover 200 are of an integral structure formed by an integrated molding process (for example, injection molding or casting), thereby reducing an assembly step and improving assembly efficiency.

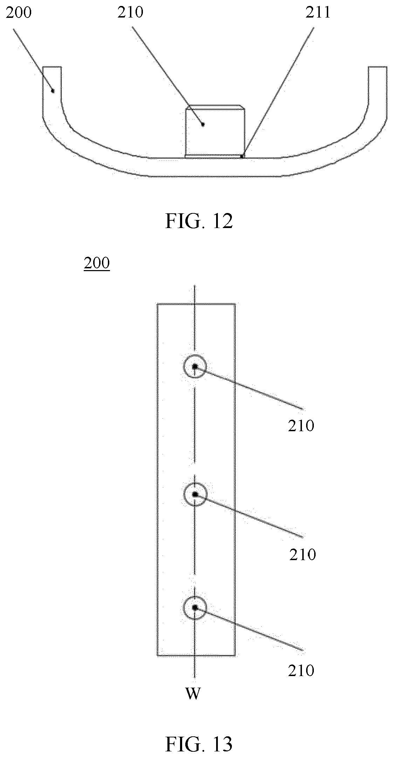

Alternatively, as shown in FIG. 12, in another implementation, a connection region 211 is provided on an end of the threaded member 210, and the threaded member 210 is connected to the shaft cover 200 through the connection region 211. The connection region 211 may be specifically a welding region or an adhesive bonding region, and the threaded member 210 is connected to the shaft cover 200 through the welding region or the adhesive bonding region. When the connection region 211 is a welding region, the connection region 211 of the threaded member 210 is connected to the shaft cover 200 through welding. When the connection region 211 is an adhesive bonding region, the welding region of the threaded member 210 is coated with glue to be connected to the shaft cover 200 by using the glue.

Alternatively, in another possible implementation, the threaded member 210 may be further connected to the shaft cover 200 by disposing an auxiliary connection structure such as a spline, a buckle, a pin, or a screw.

The connection region 211 is provided on the end of the threaded member 210, so that the threaded member 210 is connected to the shaft cover 200 through the connection region 211, and the threaded member 210 and the shaft cover 200 can be separately manufactured, thereby facilitating production and processing.

The base 100 may be connected to the shaft cover 200 by using a plurality of locking members 300. Optionally, in some implementations, at least three threaded members 210 are disposed at intervals in the length direction of the base 100, and each threaded member 210 is threaded to one locking member 300.

When there are a plurality of threaded members 210, the plurality of threaded members 210 may be evenly distributed on the base 100, or may be unevenly distributed.

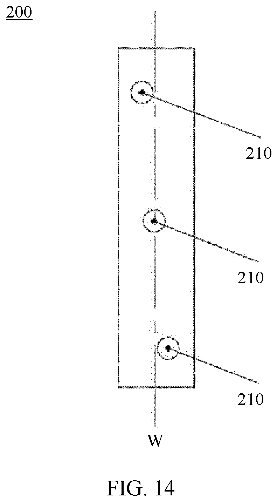

For example, as shown in FIG. 13, three threaded members 210 are disposed in the length direction of the base 100, axial centers of the three threaded members 210 are all located on a central axis W of the base 100 in the length direction, and a distance between two adjacent threaded members 210 is equal. In another disposing manner, as shown in FIG. 14, three threaded members 210 are disposed in the length direction of the base 100. An axial center of the threaded member 210 located in the middle is located on the central axis W of the base 100 in the length direction, the other two threaded members 210 are respectively located on two sides of the threaded member 210 in the middle, one threaded member 210 is located on one side of the central axis W, and the other threaded member 210 is located on the other side of the central axis W. In still another disposing manner, as shown in FIG. 15, four threaded members 210 are disposed in the length direction of the base 100, and the four threaded members 210 are staggered on two sides of the central axis W of the base 100 in the length direction.

### Second embodiment

This embodiment provides an electronic device, and the electronic device includes the foldable mechanism provided in the foregoing first embodiment.

The electronic device may be a terminal device with a display interface, such as a mobile phone, a television, a display, a tablet computer, or an in-vehicle computer, or an intelligent display wearable device, such as a smartwatch or a smart band, or a communication device, such as a server, a memory, or a base station, or an intelligent vehicle, or the like. A specific form of the electronic device is not specially limited in the embodiments of this application.

For ease of description, an example in which the electronic device is a mobile phone is used for description.

The electronic device further includes a flexible screen, a rotating shaft assembly, a screen support assembly, and a housing assembly. The rotating shaft assembly is rotatably connected to a base 100, the housing assembly is connected to the rotating shaft assembly, and the housing assembly is rotated relative to the base 100 by using the rotating shaft assembly. The screen support assembly includes a side support plate and a middle support plate 500, and the side support plate is connected to the housing assembly. As shown in FIG. 3 to FIG. 6, the middle support plate 500 is located above the base 100, and the flexible screen is laid above the side support plate and the middle support plate 500. The middle support plate 500 is movably connected to the side support plate or the base 100, so that the middle support plate 500 moves in a direction away from the base 100 in an unfolding process of the electronic device, and the middle support plate 500 and the side support plate are in a same horizontal plane when the electronic device is fully unfolded. Therefore, the middle support plate 500 supports the flexible screen together with the side support plate. In this case, a distance between the middle support plate 500 and the base 100 is relatively large (as shown in FIG. 3). In addition, in a folding process of the electronic device, the middle support plate 500 moves in a direction close to the base 100, to provide larger accommodating space for a bending region of the flexible screen, to prevent the flexible screen from being overfolded. When the electronic device is in a folded state, a distance between the middle support plate 500 and the base 100 is relatively small (as shown in FIG. 5).

In a specific implementation, the rotating shaft assembly includes at least one pair of rotating shafts, the screen support assembly includes two side support plates and one middle support plate 500, and the housing assembly includes two housings. The two housings are respectively connected to the two side support plates, and the two housings are respectively rotatably connected to two sides of the base 100. In one pair of rotating shafts, one rotating shaft is configured to rotatably connect one of the housings to one side of the base 100, and the other rotating shaft is configured to rotatably connect the other housing to the other side of the base 100. When the rotating shaft assembly includes M pairs of rotating shafts, one housing is rotatably connected to the base 100 by using M rotating shafts, and the other housing is rotatably connected to the base 100 by using the other M rotating shafts. The middle support plate 500 is located between the two side support plates, and the middle support plate 500 and the base 100 may be disposed in parallel.

In some implementations, as shown in FIG. 4 and FIG. 6, the middle support plate 500 is disposed on a side of the base 100 facing away from the shaft cover 200, and an accommodating cavity 510 is provided on a side of the middle support plate 500 facing the base 100. In a folded state of the foldable mechanism, a part of a structure of the threaded member 210 and/or the locking member 300 is located in the accommodating cavity 510. A minimum distance between the middle support plate 500 and the shaft cover 200 can be further reduced by setting the accommodating cavity 510.

For example, if the threaded member 210 protrudes by a specific distance from the threaded hole 330 of the locking member 300, an opening of the accommodating cavity 510 may be set to a size that matches the threaded member 210, that is, only the threaded member 210 extends into the accommodating cavity 510. Alternatively, as shown in FIG. 4 and FIG. 6, the accommodating cavity 510 may be set as a stepped hole. The stepped hole includes a hole segment with a relatively small aperture and a hole segment with a relatively large aperture. After the middle support plate 500 moves in a direction close to the shaft cover 200, a region of the threaded member 210 protruding to the outside of the threaded hole 330 extends into the hole segment with the relatively small aperture, and at least a partial region of the head 310 of the locking member 300 and a partial region of the threaded member 210 located inside the head 310 of the locking member 300 extend into the hole segment with the relatively large aperture. If the threaded member 210 does not protrude out of the threaded hole 330 of the locking member 300, and there is a distance between an end surface of the threaded member 210 and an end surface of the head 310 of the locking member 300, the opening of the accommodating cavity 510 may be set to match the head 310 of the locking member 300, that is, only a partial region of the head 310 of the locking member 300 extends into the accommodating cavity 510. Certainly, when the threaded member 210 does not protrude out of the threaded hole 330, regardless of whether the end surface of the threaded member 210 is flush with the end surface of the head 310 of the locking member 300 or there is a first distance between the end surface of the threaded member 210 and the end surface of the head 310 of the locking member 300, the opening of the accommodating cavity 510 may be set to match the head 310 of the locking member 300, and a depth of the accommodating cavity 510 may be made greater than a distance between the end surface of the threaded member 210 and the end surface of the head 310 of the locking member 300. That is, a partial region of the head 310 of the locking member 300, namely, a partial region of the threaded member 210 located inside the head 310 of the locking member 300, extends into the accommodating cavity 510.

In some implementations, the accommodating cavity 510 runs through the middle support plate 500 in a thickness direction of the middle support plate 500. Due to this disposition, more structures in the locking member 300 and the threaded member 210 can extend into the accommodating cavity 510, so that a distance between the middle support plate 500 and the shaft cover 200 is closer in a folded state, and a thickness of the electronic device at a middle bending location is thinner in the folded state. In addition, because the accommodating cavity 510 runs through the middle support plate 500 in the thickness direction of the middle support plate 500, in a process of assembling the middle support plate 500, the locking member 300 located on the base 100 can be observed through the accommodating cavity 510, so that a mounting position of the middle support plate 500 can be initially positioned by relatively aligning the accommodating cavity 510 with the locking member 300.

### Third embodiment

As shown in FIG. 16 to FIG. 19, this embodiment provides a disassembly-assembly structure 400. The disassembly-assembly structure 400 includes a rod body 410. One end of the rod body 410 is a disassembly-assembly end 420. The disassembly-assembly end 420 matches the head 310 of the locking member 300 in the foldable mechanism provided in the foregoing first embodiment. The disassembly-assembly end 420 is configured to rotate the head 310. Using the disassembly-assembly structure 400 facilitates rotating the locking member 300, thereby facilitating using the locking member 300 to lock and fix the base 100 and the shaft cover 200, to facilitate assembling the foldable mechanism with a relatively thin thickness.

In an optional implementation, when a cross-sectional shape of the head 310 of the locking member 300 is non-circular, the disassembly-assembly end 420 may have a groove body, and a cross-sectional shape of a cavity enclosed by an inner sidewall of the groove body is the same as a cross-sectional shape of at least a top region of the head 310 of the locking member 300, so that a disassembly-assembly portion can be sleeved on the outside of the head 310 of the locking member 300 by using the groove body, and the head 310 of the locking member 300 can be rotated by rotating the disassembly-assembly portion. For example, if the cross-sectional shape of the head 310 of the locking member 300 is a pentagon, the cross-sectional shape of the cavity enclosed by the inner sidewall of the groove body of the disassembly-assembly end 420 is also a pentagon. In this disposing manner, in comparison with directly screwing the locking member 300 by a hand of an operator, a thickness of the sidewall of the groove body of the disassembly-assembly end 420 may be set to be thinner, and occupied space required for rotation is relatively smaller. That is, relatively small space is reserved in an outer region of the head 310 of the locking member 300 to achieve assembly, so that a structure of the foldable mechanism can be set to be more compact, thereby reducing space, and facilitating lightweight design of the foldable mechanism. In addition, because the disassembly-assembly structure 400 includes a rod portion 320, there is a distance between a handheld region and the locking member 300, and operation space is larger, which facilitates operating.

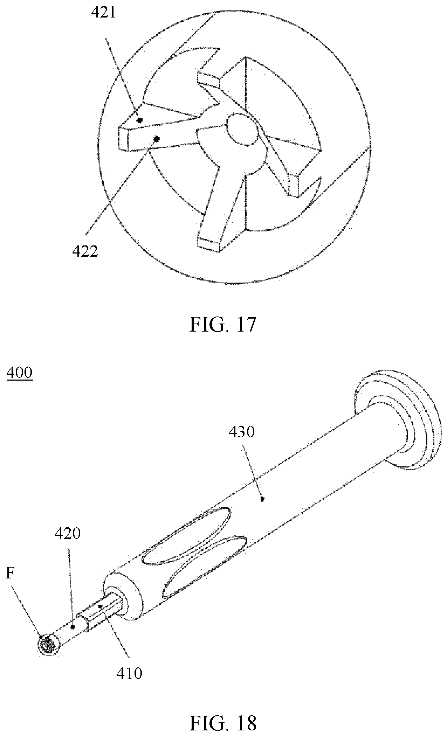

In another optional implementation, as shown in FIG. 17, the disassembly-assembly end 420 includes a second disassembly-assembly portion 421, and the second disassembly-assembly portion 421 is configured to perform relative limiting with the first disassembly-assembly portion 311 of the head 310, to rotate the head 310 by using the second disassembly-assembly portion 421.

In a feasible implementation, both the first disassembly-assembly portion 311 and the second disassembly-assembly portion 421 may include baffle plates. After a side surface of the baffle plate of the first disassembly-assembly portion 311 is in contact with a side surface of the baffle plate of the second disassembly-assembly portion 421, by rotating the disassembly-assembly structure 400, the second disassembly-assembly portion 421 is enabled to push the first disassembly-assembly portion 311 to move circularly. A center of a circle of a movement track of the first disassembly-assembly portion 311 is located on an axis of the threaded hole 330 of the locking member 300, so that the locking member 300 is driven to rotate by rotating the disassembly-assembly structure 400, to further screw the locking member 300 to the threaded member 210.

Alternatively, at least one of the first disassembly-assembly portion 311 and the second disassembly-assembly portion 421 is a groove, and at least the other is a bump. To be specific, the first disassembly-assembly portion 311 and the second disassembly-assembly portion 421 may be set in the following manner: The first disassembly-assembly portion 311 is a bump, the second disassembly-assembly portion 421 is a groove, and the second disassembly-assembly portion 421 is sleeved on the outside of the bump by using the groove. Alternatively, the first disassembly-assembly portion may be a groove, the second disassembly-assembly portion 421 is a bump, and the bump extends into the groove. Alternatively, the first disassembly-assembly portion 311 may include a groove and a bump. A bump is disposed in the second disassembly-assembly portion 421 corresponding to the groove of the first disassembly-assembly portion 311, and a groove is provided corresponding to the bump of the first disassembly-assembly portion 311. When the disassembly-assembly structure 400 matches with the locking member 300, the bump in the second disassembly-assembly portion 421 extends into the groove of the first disassembly-assembly portion 311, and the groove of the second disassembly-assembly portion 421 is enclosed on the outside of the bump of the first disassembly-assembly portion 311. By rotating the disassembly-assembly structure 400, the second disassembly-assembly portion 421 drives the first disassembly-assembly portion 311 to move circularly. The center of the circle of the movement track of the first disassembly-assembly portion 311 is located on the axis of the threaded hole 330 of the locking member 300, so that the locking member 300 is driven to rotate by rotating the disassembly-assembly structure 400, to further screw the locking member 300 to the threaded member 210.

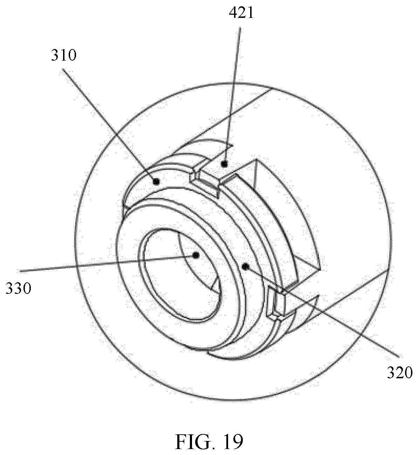

For example, as shown in FIG. 19, the first disassembly-assembly portion 311 includes a groove, the second disassembly-assembly portion 421 includes a bump, the groove is formed by the end surface of the head 310 being recessed inwardly, and an opening of the groove faces a side facing away from the base 100. The bump protrudes from the end surface of the disassembly-assembly end 420 in an axial direction of the rod portion 320 in a direction facing away from the rod portion 320, the bump can extend into the groove, and the bump is in contact with an inner wall of the groove. Due to this disposition, even if the first disassembly-assembly portion 311 is disposed on the head 310, a thickness of the head 310 of the locking member 300 is not affected, and therefore a thickness of the foldable mechanism is not affected.

In some implementations, the first disassembly-assembly portion 311 includes a groove, and the second disassembly-assembly portion 421 includes a bump. As shown in FIG. 8 and FIG. 10, a bottom surface of the groove is the first inclined surface 312. As shown in FIG. 17, the bump has a second inclined surface 422 that has a same inclination angle as the first inclined surface 312. As shown in FIG. 19, the first inclined surface 312 is in contact with the second inclined surface 422 after the bump extends into the groove. When a depth of the groove is a fixed value, the bottom surface of the groove is set as the first inclined surface 312 that is inclined, so that an area of the bottom surface of the groove can be increased, a contact area between the groove and the protrusion is further increased, and friction between the protrusion and the groove is increased. Therefore, it is convenient for the disassembly-assembly structure 400 to drive the locking member 300 to rotate, and relative stability between the disassembly-assembly structure 400 and the locking member 300 is higher during rotation.

In some implementations, as shown in FIG. 16 and FIG. 18, the disassembly-assembly end 420 is disposed on one end of the rod body 410, and a handle 430 is disposed on the other end. An outer diameter of the handle 430 is greater than an outer diameter of the rod body 410, that is, a holding region of the handle 430 is larger. This helps the operator to hold the handle 430, to drive, by using the handle 430, the rod body 410 to rotate, thereby driving, by using the disassembly-assembly end 420 on the rod body 410, the locking member 300 to rotate. An anti-slip structure may be disposed on the outside of the handle 430, and the anti-slip structure may be an anti-slip groove, an anti-slip protruding point, or an anti-slip pad. The anti-slip pad may be made of flexible materials such as rubber and sponge, and can improve comfort of holding while playing a role of anti-slipping.

## Claims

1. An electronic device, comprising a foldable mechanism;
wherein the foldable mechanism comprises a base (100), a shaft cover (200), and locking members (300);
threaded members (210) are disposed on the shaft cover (200), the threaded members (210) each have an external thread;
the locking members (300) each have a head (310) and a rod portion (320), the head (310) is connected to the rod portion (320), the locking members (300) each have a threaded hole (330) that successively runs through the head (310) and the rod portion (320);
a through hole (110) is provided on the base (100); and
an outer diameter of the head (310) is greater than an aperture of the through hole (110), the rod portion (320) is threaded to the threaded member (210) by passing through the through hole (110), the locking member (300) is threaded to the threaded member (210) through the threaded hole (330); wherein
the threaded member (210) and the shaft cover (200) are of an integral structure; and
a first disassembly-assembly portion (311) is disposed on the head (310).

2. The electronic device according to claim 1, wherein the first disassembly-assembly portion (311) comprises a groove, and the groove is provided on a side that is of the head (310) and that is away from the rod portion (320).

3. The electronic device according to claim 2, wherein a bottom surface of the groove is a first inclined surface inclined relative to an axis of the head (310).

4. The electronic device according to claim 1, wherein there are a plurality of first disassembly-assembly portions (311), and the plurality of first disassembly-assembly portions (311) are distributed on the head (310) at intervals in a circumferential direction.

5. The electronic device according to claim 1, wherein the first disassembly-assembly portion (311) is disposed on an outer edge of the head (310).

6. The electronic device according to claim 1, wherein there is a gap (S1) between the rod portion (320) and the shaft cover (200).

7. The electronic device according to claim 6, wherein the gap (S1) is 0.1 mm-0.4 mm.

8. The electronic device according to claim 1, wherein the outer diameter of the head (310) is 2 mm-4 mm, an outer diameter of the rod portion (320) is 1.5 mm-3.5 mm, and an outer diameter of the threaded member (210) is 1.2 mm-2 mm.

9. The electronic device according to claim 1, wherein an axial length of the threaded member (210) is 0.8 mm-2 mm; an axial length of the head (310) is 0.25 mm-0.8 mm; and a thickness of a region in the base (100) and corresponding to the head (310) is 0.25 mm-0.8 mm.

10. The electronic device according to claim 1, wherein a welding region or an adhesive bonding region is disposed at one end of the threaded member (210), and the threaded member (210) is connected to the shaft cover (200) through the welding region or the adhesive bonding region.

11. The electronic device according to claim 1, wherein at least three threaded members (210) are disposed at intervals in a length direction of the shaft cover (200), and each of the threaded members (210) is threaded to one locking member (300).

12. The electronic device according to any one of claims 1 to 11, wherein the electronic device further comprises a middle support plate (500), the middle support plate (500) is disposed on a side of the base (100) facing away from the shaft cover (200), an accommodating cavity (510) is provided on a side of the middle support plate (500) facing the base (100), and a part of a structure of the threaded member (210) and/or the locking member (300) is located in the accommodating cavity (510) in a folded state of the foldable mechanism.

13. The electronic device according to claim 12, wherein the accommodating cavity (510) runs through the middle support plate (500) in a thickness direction of the middle support plate (500).

## Patentansprüche

1. Elektronisches Gerät, umfassend einen Faltmechanismus;
wobei der Faltmechanismus eine Basis (100), eine Wellenabdeckung (200) und Verriegelungselemente (300) umfasst;
wobei an der Wellenabdeckung (200) Gewindeelemente (210) angeordnet sind, wobei die Gewindeelemente (210) jeweils ein Außengewinde aufweisen;
wobei die Verriegelungselemente (300) jeweils einen Kopf (310) und einen Stangenabschnitt (320) aufweisen, wobei der Kopf (310) mit dem Stangenabschnitt (320) verbunden ist, wobei die Verriegelungselemente (300) jeweils eine Gewindebohrung (330) aufweisen, die nacheinander durch den Kopf (310) und den Stangenabschnitt (320) verläuft;
wobei an der Basis (100) ein Durchgangsloch (110) vorgesehen ist; und
wobei ein Außendurchmesser des Kopfes (310) größer als eine Öffnung des Durchgangslochs (110) ist, der Stangenabschnitt (320) durch das Durchgangsloch (110) hindurch mit dem Gewindeelement (210) verschraubt ist, das Verriegelungselement (300) durch die Gewindebohrung (330) mit dem Gewindeelement (210) verschraubt ist; wobei
das Gewindeelement (210) und die Wellenabdeckung (200) eine integrale Struktur bilden; und
ein erster Demontage-Montage-Abschnitt (311) am Kopf (310) angeordnet ist.

2. Elektronisches Gerät nach Anspruch 1, wobei der erste Demontage-Montage-Abschnitt (311) eine Nut umfasst, und die Nut an einer Seite des Kopfes (310) vorgesehen ist, die von dem Stangenabschnitt (320) abgewandt ist.

3. Elektronisches Gerät nach Anspruch 2, wobei eine Bodenfläche der Nut eine erste geneigte Fläche ist, die relativ zu einer Achse des Kopfes (310) geneigt ist.

4. Elektronisches Gerät nach Anspruch 1, wobei eine Vielzahl von ersten Demontage-Montage-Abschnitten (311) vorhanden ist und die Vielzahl von ersten Demontage-Montage-Abschnitten (311) in Umfangsrichtung beabstandet am Kopf (310) verteilt ist.

5. Elektronisches Gerät nach Anspruch 1, wobei der erste Demontage-Montage-Abschnitt (311) an einem Außenrand des Kopfes (310) angeordnet ist.

6. Elektronisches Gerät nach Anspruch 1, wobei zwischen dem Stangenabschnitt (320) und der Wellenabdeckung (200) ein Spalt (S1) vorhanden ist.

7. Elektronisches Gerät nach Anspruch 6, wobei der Spalt (S1) 0,1 mm bis 0,4 mm beträgt.

8. Elektronisches Gerät nach Anspruch 1, wobei der Außendurchmesser des Kopfes (310) 2 mm bis 4 mm, ein Außendurchmesser des Stangenabschnitts (320) 1,5 mm bis 3,5 mm und ein Außendurchmesser des Gewindeelements (210) 1,2 mm bis 2 mm beträgt.

9. Elektronische Vorrichtung nach Anspruch 1, wobei eine axiale Länge des Gewindeelements (210) 0,8 mm bis 2 mm beträgt; eine axiale Länge des Kopfes (310) 0,25 mm bis 0,8 mm beträgt; und eine Dicke eines Bereichs in der Basis (100), der dem Kopf (310) entspricht, 0,25 mm bis 0,8 mm beträgt.

10. Elektronische Vorrichtung nach Anspruch 1, wobei ein Schweißbereich oder ein Klebeverbindungsbereich an einem Ende des Gewindeelements (210) angeordnet ist und das Gewindeelement (210) durch den Schweißbereich oder den Klebeverbindungsbereich mit der Wellenabdeckung (200) verbunden ist.

11. Elektronische Vorrichtung nach Anspruch 1, wobei mindestens drei Gewindeelemente (210) in Abständen in einer Längsrichtung der Wellenabdeckung (200) angeordnet sind und jedes der Gewindeelemente (210) mit einem Sicherungselement (300) verschraubt ist.

12. Elektronische Vorrichtung nach einem der Ansprüche 1 bis 11, wobei die elektronische Vorrichtung ferner eine mittlere Stützplatte (500) umfasst, wobei die mittlere Stützplatte (500) auf einer Seite der Basis (100) angeordnet ist, die von der Wellenabdeckung (200) abgewandt ist, ein Aufnahmehohlraum (510) auf einer Seite der mittleren Stützplatte (500) vorgesehen ist, die der Basis (100) zugewandt ist, und ein Teil einer Struktur des Gewindeelements (210) und/oder des Sicherungselements (300) im gefalteten Zustand des faltbaren Mechanismus in dem Aufnahmehohlraum (510) angeordnet ist.

13. Elektronische Vorrichtung nach Anspruch 12, wobei der Aufnahmehohlraum (510) in einer Dickenrichtung der mittleren Stützplatte (500) durch die mittlere Stützplatte (500) verläuft.

## Revendications

1. Dispositif électronique, comprenant un mécanisme pliable ;
dans lequel le mécanisme pliable comprend une base (100), un couvercle d'arbre (200) et des éléments de verrouillage (300) ;
des éléments filetés (210) sont disposés sur le couvercle d'arbre (200), les éléments filetés (210) présentant chacun un filetage externe ;
les éléments de verrouillage (300) présentent chacun une tête (310) et une partie de tige (320), la tête (310) est reliée à la partie de tige (320), les éléments de verrouillage (300) présentent chacun un trou fileté (330) qui traverse successivement la tête (310) et la partie de tige (320) ;
un trou traversant (110) est prévu sur la base (100) ; et
un diamètre extérieur de la tête (310) est supérieur à une ouverture du trou traversant (110), la partie de tige (320) est vissée sur l'élément fileté (210) en passant à travers le trou traversant (110), l'élément de verrouillage (300) est vissé sur l'élément fileté (210) à travers le trou fileté (330) ; dans lequel
l'élément fileté (210) et le couvercle d'arbre (200) sont d'une structure intégrale ; et
une première partie de démontage-montage (311) est disposée sur la tête (310).

2. Dispositif électronique selon la revendication 1, dans lequel la première partie de démontage-montage (311) comprend une rainure, et la rainure est prévue sur un côté qui est celui de la tête (310) et qui est éloigné de la partie de tige (320).

3. Dispositif électronique selon la revendication 2, dans lequel une surface inférieure de la rainure est une première surface inclinée par rapport à un axe de la tête (310).

4. Dispositif électronique selon la revendication 1, dans lequel il existe une pluralité de premières parties de démontage-montage (311), et la pluralité de premières parties de démontage-montage (311) sont réparties sur la tête (310) à intervalles dans une direction circonférentielle.

5. Dispositif électronique selon la revendication 1, dans lequel la première partie de démontage-montage (311) est disposée sur un bord extérieur de la tête (310).

6. Dispositif électronique selon la revendication 1, dans lequel il existe un espace (S1) entre la partie de tige (320) et le couvercle d'arbre (200).

7. Dispositif électronique selon la revendication 6, dans lequel l'espace (S1) est compris entre 0,1 mm et 0,4 mm.

8. Dispositif électronique selon la revendication 1, dans lequel le diamètre extérieur de la tête (310) est compris entre 2 mm et 4 mm, un diamètre extérieur de la partie de tige (320) est compris entre 1,5 mm et 3,5 mm, et un diamètre extérieur de l'élément fileté (210) est compris entre 1,2 mm et 2 mm.

9. Dispositif électronique selon la revendication 1, dans lequel une longueur axiale de l'élément fileté (210) est comprise entre 0,8 mm et 2 mm ; une longueur axiale de la tête (310) est comprise entre 0,25 mm et 0,8 mm ; et une épaisseur d'une zone dans la base (100) correspondant à la tête (310) est comprise entre 0,25 mm et 0,8 mm.

10. Dispositif électronique selon la revendication 1, dans lequel une zone de soudage ou une zone de liaison adhésive est disposée à une extrémité de l'élément fileté (210), et l'élément fileté (210) est relié au couvercle d'arbre (200) par l'intermédiaire de la zone de soudage ou de la zone de liaison adhésive.

11. Dispositif électronique selon la revendication 1, dans lequel au moins trois éléments filetés (210) sont disposés à intervalles dans une direction longitudinale du couvercle d'arbre (200), et chacun des éléments filetés (210) est vissé à un élément de verrouillage (300).

12. Dispositif électronique selon l'une quelconque des revendications 1 à 11, dans lequel le dispositif électronique comprend en outre une plaque de support intermédiaire (500), la plaque de support intermédiaire (500) est disposée sur un côté de la base (100) opposé au couvercle d'arbre (200), une cavité de logement (510) est prévue sur un côté de la plaque de support intermédiaire (500) faisant face à la base (100), et une partie d'une structure de l'élément fileté (210) et/ou de l'élément de verrouillage (300) est située dans la cavité de logement (510) dans un état plié du mécanisme pliable.

13. Dispositif électronique selon la revendication 12, dans lequel la cavité de logement (510) traverse la plaque de support intermédiaire (500) dans une direction d'épaisseur de la plaque de support intermédiaire (500).
